# EUROPÄISCHE PATENTANMELDUNG

(11) **EP 3 744 452 A1**
(43) Veröffentlichungstag der Anmeldung: **02.12.2020**
(21) Anmeldenummer: 20175962.8
(22) Anmeldetag: 22.05.2020
(51) Int. Cl.: B23C 5/10, B23C 5/28

(54) **FRÄSWERKZEUG MIT INNENKÜHLUNG**

(30) Priorität: 31.05.2019 DE 102019114704
(71) Anmelder: Hofmann & Vratny OHG, 85617 Assling (DE)
(72) Erfinder: Vratny, Andreas, 85617 Aßling (DE)
(74) Vertreter: Beckord & Niedlich Patentanwälte PartG mbB

(57) **Zusammenfassung**

Ein Fräswerkzeug (1) mit einem im Wesentlichen zylindrischen Grundkörper (1) mit einer Drehachse, mit einem bis zu einem ersten Ende des Fräswerkzeugs (1) reichenden Schaftabschnitt zum Einspannen des Fräswerkzeugs (1) in einer Bearbeitungsmaschine, mit einem bis zu einem gegenüberliegenden zweiten Ende des Fräswerkzeugs (1) reichenden und einem dem Schaftabschnitt gegenüberliegenden Fräsabschnitt (3), mit einer Stirnseite (4) des Fräsabschnitts (3), die mindestens eine von der Drehachse radial und in einer Draufsicht weitgehend geradlinig zum Umfang verlaufende Stirnschneide (5) aufweist, mit einem in der Stirnseite (4) mündenden Kühl- und/oder Schmiermittelkanal (20), dessen Mündungsöffnung (21) in der Stirnseite (4) konzentrisch zur Drehachse liegt, wird dadurch weitergebildet, dass die Stirnschneide (5) bis an die Mündungsöffnung (21) heranreicht.

## Beschreibung

Die Erfindung betrifft ein Fräswerkzeug mit einem im Wesentlichen zylindrischen Grundkörper mit einer Drehachse, mit einem bis zu einem ersten Ende des Fräswerkzeugs reichenden Schaftabschnitt zum Einspannen des Fräswerkzeugs in einer Bearbeitungsmaschine, mit einem bis zu einem gegenüberliegenden zweiten Ende des Fräswerkzeugs reichenden und einem dem Schaftabschnitt gegenüberliegenden Fräsabschnitt, mit einer Stirnseite oder Stirnfreifläche des Fräsabschnitts, die mindestens eine von der Drehachse im Wesentlichen radial zum Umfang verlaufende Stirnschneide aufweist, die in eine umfangsseitig in einem Schraubengang verlaufende Umfangsschneide übergeht, mit einem in der Stirnseite mündenden Kühl- und/oder Schmiermittelkanal, dessen Mündungsöffnung konzentrisch zur Drehachse liegt. Das Fräswerkzeug ist insbesondere als Tauchfräser einsetzbar.

Die WO 2015/075 117 beschreibt und zeigt ein Fräswerkzeug mit einem eine Mittelachse und eine Stirnseite aufweisenden Grundkörper, mindestens einem ausgehenden Stollen, wenigstens einer an dem mindestens einen Stollen vorgesehenen geometrisch definierten Schneide, die in ihrem der Mittelachse nächstgelegenen Bereich unter einem Bogen in die Stirnseite übergeht und einen in die Stirnseite mündenden Kühl-/Schmiermittelkanal, dessen Mündungsöffnung konzentrisch zur Mittelachse angeordnet ist.

Es ist Aufgabe der vorliegenden Erfindung, ein Fräswerkzeug anzugeben, das über einen zentralen Kühl- und/oder Schmiermittelkanal verfügt und verbesserte Fräseigenschaften bietet.

Diese Aufgabe wird bei dem eingangs genannten Fräswerkzeug erfindungsgemäß dadurch gelöst, dass die Stirnschneide im Wesentlichen bis an die Mündungsöffnung heranreicht. Die Erfindung wendet sich also davon ab, bei Anordnung eines zentralen Kühl- und/oder Schmiermittelkanals von ihm einen gewissen Abstand bis zum Beginn einer Stirnschneide einzuhalten und damit zwischen einer Mündungsöffnung des Kühl- und/oder Schmiermittelkanals und dem drehachsenseitigen Ende der Stirnschneide eine Freifläche vorzusehen, die ein radiales und möglichst verwirbelungsfreies Abfließen des Kühl- und/oder Schmiermittels und abgescherter Späne erlaubt. Die Erfindung verfolgt vielmehr das Prinzip, auf eine Freifläche weitgehend zu verzichten und die Stirnschneide möglichst nah an die Mündungsöffnung des Kühl- und/oder Schmiermittelkanals heranzuführen, vorzugsweise unmittelbar an ihn anschließen zu lassen. Der Erfindung ist nämlich die Erkenntnis zu verdanken, dass bei ausreichend kleinem Durchmesser der Mündungsöffnung bzw. eines schneidenfreien Zentrums im Verhältnis zum Werkzeugdurchmesser ein Restmaterial des Werkstücks im Bereich des schneidenfreien Zentrums weggerissen wird. Zudem ist ein Verlegen oder Verstopfen der Mündungsöffnung durch abgearbeitete Späne in der Regel eher selten. Damit lässt sich die Stirnseite des Fräswerkzeugs mit längeren Stirnschneiden ausstatten, was die Effizienz des Fräswerkzeugs steigert.

Das schneidenfreie Zentrum kann durch die Ausbildung der Mündungsöffnung des Kühl- und/oder Schmiermittelkanals entstehen. Es kann dann weitgehend denselben Durchmesser wie der Kühl- und/oder Schmiermittelkanal selbst oder zumindest seiner Mündungsöffnung aufweisen. Alternativ kann das schneidenfreie Zentrum einen größeren Durchmesser als die Mündungsöffnung aufweisen, wenn sie beispielsweise aus Herstellungsgründen ein schmaler schneidenloser Ring umgibt. Jedenfalls erfordert die Erfindung keinen erheblichen Abstand mehr zwischen dem drehachsenseitigen Ende der Stirnschneide einerseits und der Mündungsöffnung des Kühl- und/oder Schmiermittelkanals andererseits etwa zum leichteren Ausströmen des Kühl- und/oder Schmiermittels. Sie nutzt den gewonnenen Raum vielmehr zur Anordnung einer radial längeren Schneide und damit zur Effizienzsteigerung.

Das erfolgreiche Wegreißen von Restmaterial im zentralen Bereich des Fräswerkzeug, in dem keine Schneidenabschnitte vorhanden sind, lässt sich also durch eine geeignete Dimensionierung des Durchmessers des schneidenfreien Zentrums einerseits im Verhältnis zum Durchmesser des Fräswerkzeugs oder jedenfalls seines Fräsabschnitts andererseits begünstigen. Alternativ oder zusätzlich kann das Fräswerkzeug stirnseitige mechanische Mittel umfassen, die das Abreißen von Restmaterial ohne die unmittelbare Einwirkung von Schneiden begünstigen. Nach einer vorteilhaften Ausgestaltung der Erfindung kann das Fräswerkzeug daher mit einem der Drehachse nahen Spanleitabschnitt der Stirnschneide versehen sein, der mit dem Radius des Fräswerkzeugs einen sich zur Drehachse hin öffnenden Spanleitwinkel einschließt. Der erfindungsgemäße Spanleitabschnitt ist ein Abschnitt der Stirnschneide, also weitgehend wie sie ausgebildet. Die Stirnschneide wird der Einfachheit halber zunächst als geradlinig radial verlaufende Schneide betrachtet. Der Spanleitabschnitt verläuft nun aber nicht im Wesentlichen radial, sondern entgegen der Drehrichtung des Werkzeugs vom Radius weggekippt, eilt jenem quasi hinterher und mündet insofern außermittig zur Drehachse bzw. in Drehrichtung vor der Drehachse am schneidenfreien Zentrum ("untermittig"). Im Einsatz des Fräswerkzeugs schert er wie die übrige Stirnschneide Material in der Form eines Spanabschnitts von der Werkstückoberfläche ab. Aufgrund seiner erfindungsgemäßen Orientierung drängt er jedoch den Spanabschnitt zunächst in eine Richtung auf die Drehachse bzw. das schneidenfreie Zentrum hin. Dort nimmt er mittiges Restmaterial mit, mit dem er an seinem drehachsenzugewandten Bereich evtl. noch in Verbindung steht. Anschließend werden er und das Restmaterial per Fliehkraft und/oder per druckbeaufschlagtem Kühl- und/oder Schmiermittel in den Spanabführkanal abgeleitet. Die Ausbildung eines untermittigen, quasi nachlaufenden zentrumsnahen Spanleitabschnitts ermöglicht eine größere schneidenfreie Fläche im Verhältnis zum Werkzeugdurchmesser, beispielsweise einen größeren Durchmesser der Mündungsöffnung des Kühl- und/oder Schmiermittelkanals, ohne aber dadurch zu Einbußen beim Bearbeitungsergebnis zu führen. Damit kann der obige schmale schneidenlose Ring, der die Mündungsöffnung umgeben kann, oder auch der Durchmesser des Kanals selbst zunehmen, womit ein größerer Durchsatz an Kühl- und/oder Schmiermittel möglich ist.

Der Einfachheit halber war der überwiegende Verlauf der Stirnschneide bislang als geradlinig angenommen worden. Nach einer weiteren vorteilhaften Ausgestaltung des erfindungsgemäßen Fräswerkzeug kann es mit mindestens einer in einer Draufsicht betrachtet in Drehrichtung gekrümmten Stirnschneide ausgestattet sein. Die gekrümmte Stirnschneide bietet damit an jedem ihrer Kontaktpunkte mit dem Werkstück einen anderen Auftreffwinkel der Schneide auf die Oberfläche des Werkstücks als an jedem daneben liegendem Kontaktpunkt. Die unterschiedlichen Auftreffwinkel führen zu jeweils unterschiedlichen mechanische Belastungen der Stirnscheide entlang ihres radialen Verlaufs. Die jeweils unterschiedlichen Belastungen wiederum verhindern die Entstehung von Vibrationen des Fräswerkzeugs, womit sich dessen Standzeiten verbessern und sich bessere Oberflächenqualitäten erzielen lassen.

Die Krümmung kann außerdem die Spanabfuhr der abgescherten Späne deutlich beeinflussen, insbesondere beschleunigen, womit sich auch die bei der Bearbeitung entstehende Wärme ableiten und Beeinträchtigungen der Werkstückoberfläche durch Späne verhindern lässt. Vorzugsweise kann der Verlauf der Stirnschneide in Drehrichtung konvex gekrümmt sein. Damit lässt sich eine radiale Spanabfuhr zumindest in einem umfangnahen Bereich der Stirnschneide begünstigen, so dass sich die Gefahr eines Verklemmens von Spänen in einem der Stirnschneide zugeordneten Spanabführkanal deutlich reduzieren lässt.

Ein konvexer Verlauf der Stirnschneide kann darüber hinaus derart gestaltet sein, dass er einen Spanleitabschnitt im obigen Sinne ausbildet: Dazu beginnt der Verlauf im Bereich der Drehachse nicht radial bzw. an einem Schnittpunkt des Radius mit dem Umfang des schneidenfreien Zentrums, sondern untermittig, also in Drehrichtung betrachtet auf dem Umfang "dahinter". Aufgrund seiner in Drehrichtung konvexen Krümmung kann er damit drehachsennah einen Spanleitwinkel im obigen Sinne ausbilden. Im weiteren Verlauf kann er vorzugsweise einen ebenfalls drehachsennahen Berührpunkt an den Radius des Fräsabschnitts als Tangente aufweisen. Der Berührpunkt kann den in Drehrichtung vordersten Punkt der Stirnschneide darstellen, ab dem der Verlauf der Stirnschneide in Richtung auf den Umfang zu hinter dem Radius bleibt. Damit kann eine radial auswärts gerichtete Kraft der Stirnschneide auf den abgescherten Span ausgeübt werden, der sie Spanabfuhr unterstützt. Die Krümmungslinie der Stirnschneide braucht dazu keinen konstanten Radius aufzuweisen, sondern kann variieren, beispielsweise drehachsennah mit einem engen Radius beginnen und in Umfangsrichtung größere Radien aufweisen, wie beispielsweise eine Klothoide.

Im Interesse einer langen Standzeit des Fräswerkzeugs werden Kanten oder Stufen im Verlauf der hoch belasteten Schneiden im Allgemeinen vermieden. Daher kann der Spanleitabschnitt zum schneidenfreien Zentrum hin auslaufen oder weitgehend kontinuierlich in einen Rand der Mündungsöffnung übergehen. Nach einer weiteren vorteilhaften Ausgestaltung der Erfindung kann der Spanleitabschnitt in einer radialen Schnittansicht gesehen von der Stirnfläche weg auch mit einer Spanleitstufe in das schneidenfreien Zentrum bzw. in die Mündungsöffnung übergehen. Der Grat bzw. der Scheitel der Spanleitstufe bzw. der Stirnschneide als jeweils höchster Erhebung liegt also höher bzw. der Stirnfläche näher als das schneidenfreie Zentrum bzw. als der Rand der Mündungsöffnung. Dadurch kommt es zur Ausbildung der Spanleitstufe bzw. einer weitgehend vertikalen Bruchkante, die den vom Spanleitabschnitt abgescherten Span vom Restmaterial, das noch entfernt wird, bricht. Anschließend reißt er, vom Spanleitabschnitt ins Zentrum gedrängt, zusammen mit den Spänen jedes weiteren Spanleitabschnitts das Restmaterial vom Werkstück ab, so dass auch im schneidenfreien Zentrum kein Material verbleibt. Die Spanleitstufe definiert außerdem einen Abstand des schneidenfreien Zentrums vom Grat des Spanleitabschnitts und schafft damit einen Verdrängungsraum für den zunächst nach innen gedrängten Spanabschnitt und eine Austrittsöffnung für das Kühl- und/oder Schmiermittel

Nach einer weiteren vorteilhaften Ausgestaltung der Erfindung kann der Spanleitabschnitt in einem Spanleitwinkel ϕ zwischen 5° und 40°, vorzugsweise zwischen 15° bis 25° verlaufen. Der Spanleitwinkel ist derjenige Winkel, den der geradlinige Spanleitabschnitt selbst oder der gekrümmte Spanleitabschnitt im Mittel mit dem Radius einschließt. Er kann weitgehend unabhängig vom Durchmesser des Fräsabschnitts angegeben werden. Aus Versuchen ergab sich ein Optimum bei etwa 20°, bei dem der Spanleitabschnitt seine höchste Effizienz erzielt hat.

Nach einer weiteren vorteilhaften Ausgestaltung der Erfindung kann der Spanleitabschnitt einen Bereich von etwa 3% bis 10% des Durchmessers des Fräsabschnitts einnehmen. Bei Durchmessern des Fräsabschnitts von 6 mm bis 20 mm ergaben sich günstige Längen des Spanleitabschnitt bei 0,4 bis 0,6 mm für den geringsten Durchmesser, also im Mittel etwa 8,3 %, und bei 0,8 bis 0,9 mm für den größten Durchmesser, also im Mittel etwa 4 % des Durchmessers des Fräsabschnitts. Ein jeweiliges Optimum für die Länge des Spanleitabschnitts ist nachvollziehbar also vom Durchmesser des Fräsabschnitts abhängig.

Nach einer weiteren vorteilhaften Ausgestaltung der Erfindung kann die Höhe der Spanleitstufe in einem Bereich von 3% bis 10% des Durchmessers des Fräsabschnitts betragen. Bei einem Durchmesser des Fräsabschnitts von 6 mm kann die Tiefe der Spanleitstufe beispielsweise 0,5 mm oder 8,3% des Durchmesser annehmen, bei einem Durchmesser von 20 mm dagegen eine Tiefe von 0,8 bis 0,9 mm, also im Mittel etwa 4,25% des Durchmessers.

Insgesamt bietet das Fräswerkzeug damit eine große Bandbreite an Gestaltungsmöglichkeiten zur Ausbildung eines Spanleitabschnitts. Seine konkrete Ausgestaltung kann also zumindest durch die obigen Parameter des Spanleitwinkels ϕ und der Länge und der Tiefe der Spanleitstufe auch in einer größeren Bandbreite als in den oben angegebenen Intervallen variiert werden, weil sich sicher noch darüber hinausweisende Kombinationen anbieten, die die erfindungsgemäße Funktion des Spanleitabschnitts erfüllen.

Nach einer weiteren vorteilhaften Ausgestaltung kann das erfindungsgemäße Fräswerkzeug an seinem Fräsabschnitt eine Zentriereinrichtung gegen ein Verlaufen in einer Richtung rechtwinklig zur Drehachse aufweisen. Die Zentriereinrichtung kann ein axiales Eintauchen in ein Werkstück zur Herstellung einer Ausnehmung erleichtern, weil es das rotierende Fräswerkzeug stabilisiert und ihm dank seiner Zentriereigenschaften eine hohe Präzision verleiht. Damit ist es möglich, ein Fräswerkzeug zu bieten, das einerseits unter Verwendung eines axial zugeführten Kühl- und/oder Schmiermittels eingesetzt werden kann, das aber andererseits auch eine Zentrierwirkung des Fräswerkzeugs gegenüber dem Werkstück bietet. Die zentrische Anordnung der Mündungsöffnung des Kühl- und/oder Schmiermittelkanals ist nur möglich, weil die Zentrierwirkung erfindungsgemäß nicht von einem zentralen Abschnitt des Fräswerkzeugs ausgeht, sondern von der besonderen Gestaltung seiner Stirnschneiden und der damit ausgebildeten stirnseitigen Kavität oder Einbuchtung.

Nach einer weiteren vorteilhaften Ausgestaltung der Erfindung kann die Zentriereinrichtung in einer speziellen Geometrie der Stirnschneiden des Fräsabschnitts bestehen, wie sie in der parallelen Anmeldung mit der Anmeldernummer P06802 desselben Anmelders mit demselben Anmeldetag wie die vorliegende offenbart ist. Ihr diesbezüglicher Inhalt wird auch zum Inhalt der vorliegenden Anmeldung gemacht. Demnach kann das Fräswerkzeug insbesondere mit einem der Drehachse näher liegenden inneren Schneidenabschnitt der Stirnschneide und mit einem der Drehachse ferner liegenden äußeren Schneidenabschnitt der Stirnschneide als Zentriereinrichtung ausgebildet sein, wobei der innere Schneidenabschnitt zur Drehachse hin stärker abfällt als der äußere Schneidenabschnitt. Denn eine Zentrierwirkung eines Fräswerkzeugs ist auch dadurch zu erreichen, dass es eine stirnseitige quasi glockenförmige Kavität, Einbuchtung oder Ausnehmung als Zentriereinrichtung aufweist. Damit "saugt" sich das Fräswerkzeug gleichsam an das Werkstück und verhindert sein seitliches Verlaufen.

Vorzugsweise kann zumindest der innere Schneidenabschnitt und dieser zumindest abschnittsweise ausgerundet sein. Je nach Geometire des Fräswerkzeugs kann die Ausrundung konkav oder konvex sein. Die Ausrundung kann einen kontinuierlichen Übergang zwischen unterschiedlich geneigten geradlinigen Teilabschnitten erzeugen, der Belastungsspitzen vermeidet. Eine durchgehende Ausrundung als innerer Schneidenabschnitt führt zu jeweils unterschiedlichen Schneidwinkeln im Verlauf des inneren Schneidenabschnitt gegenüber der Werkzeugoberfläche, die wiederum unterschiedliche Belastungen im Schneidenverlauf bzw. eine gleichmäßige Verteilung der Schnittkräfte verursachen. Unterschiedliche Belastungen, insbesondere im Zuge desselben Schneidenabschnitts, verhindern ein Vibrieren des Fräsabschnitts, was zu einem ruhigen Lauf des Fräswerkzeugs führt. Ausbleibende Vibrationen sorgen außerdem für hohe Standzeiten des Werkzeugs und tragen zu einer guten Oberflächenqualität des bearbeiteten Werkstücks bei. Vorzugsweise ist der innere Schneidenabschnitt konkav ausgerundet. Die konkave Ausrundung an der Stirnform sorgt für eine optimale Zentrierwirkung beim Eintauchen in ein zu bearbeitendes Material. Die Ausrundung trägt auch zu einem optimalen Abfließen der Späne von der Stirn des Fräsabschnitts bei.

Darüber hinaus kann der äußere Schneidenabschnitt in einer Schnittansicht geradlinig verlaufen, mit einem Radius in den inneren Schneidenabschnitt übergehen und in einem Winkel von 3° bis 10° von der Stirnseite weg geneigt sein, wie detailliert in der obigen parallelen Anmeldung mit der Anmeldernummer P06802 beschrieben.

Das Prinzip der Erfindung wird im Folgenden anhand einer Zeichnung beispielshalber noch näher erläutert. In der Zeichnung zeigen:
- Figur 1: eine Draufsicht einer Ausführungsform des erfindungsgemäßen Fräswerkzeugs,
- Figur 2: eine Seitenansicht und
- Figur 3: eine perspektivische Ansicht des Fräswerkzeugs gemäß Figur 1.

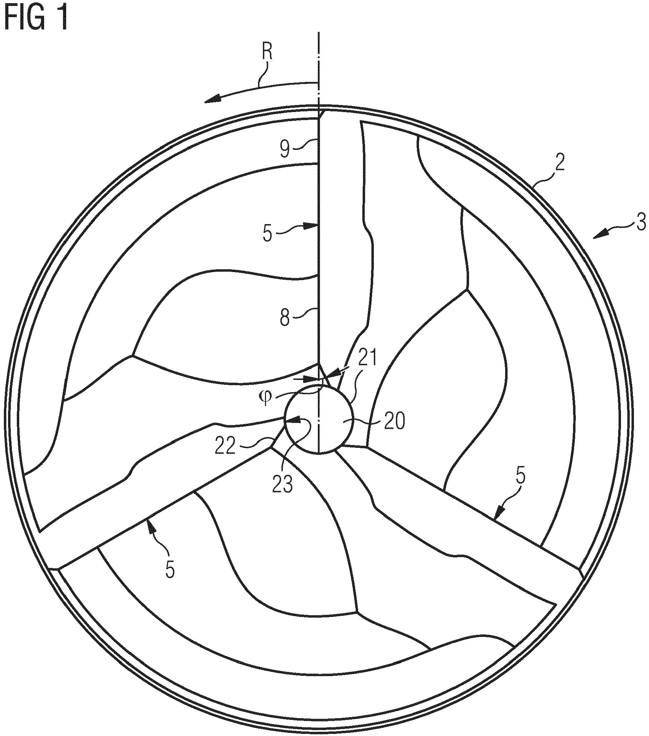

Die erste Ausführungsform des erfindungsgemäßen Fräswerkzeugs wird ausgehend von Figur 1 anhand der drei Figuren gemeinsam beschrieben:

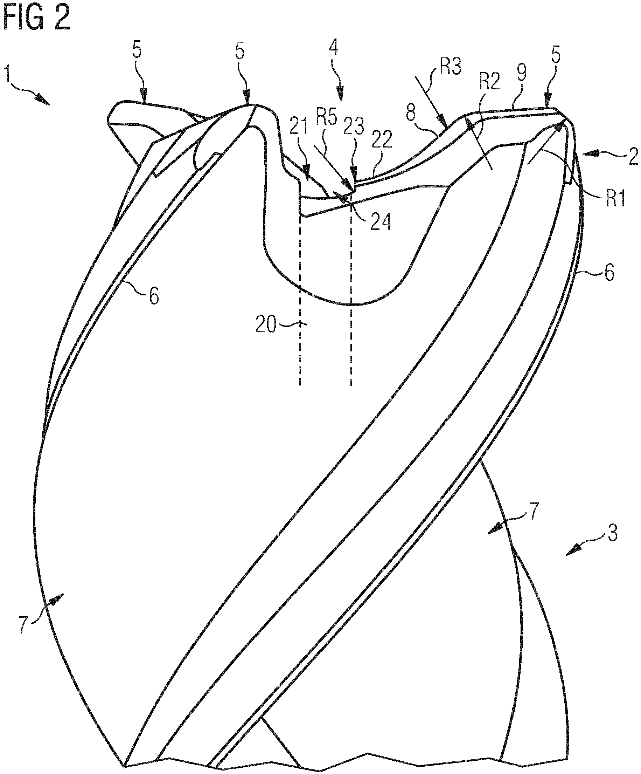

Figur 1 zeigt eine Draufsicht auf eine Stirnseite 4 (Figur 2) einer ersten Ausführungsform des erfindungsgemäßen Fräswerkzeugs. Es besitzt einen im Wesentlichen drehzylindrischen Grundkörper 1 mit einer Drehachse, um die das Fräswerkzeug im Betrieb in einer Drehrichtung R entgegen der Uhrzeigerrichtung gedreht wird. In der Drehachse liegt ein Kühl- und/oder Schmiermittelkanal 20. Dessen Mündungsöffnung 21 liegt konzentrisch zur Drehachse in der Stirnseite 4 eines an einem ersten Ende des Grundkörpers 1 liegenden Fräsabschnitts 3. Am nicht dargestellten anderen Ende des Fräswerkzeugs befindet sich ein an sich bekannter Schaftabschnitt zum Einspannen des Fräswerkzeugs in einer Bearbeitungsmaschine.

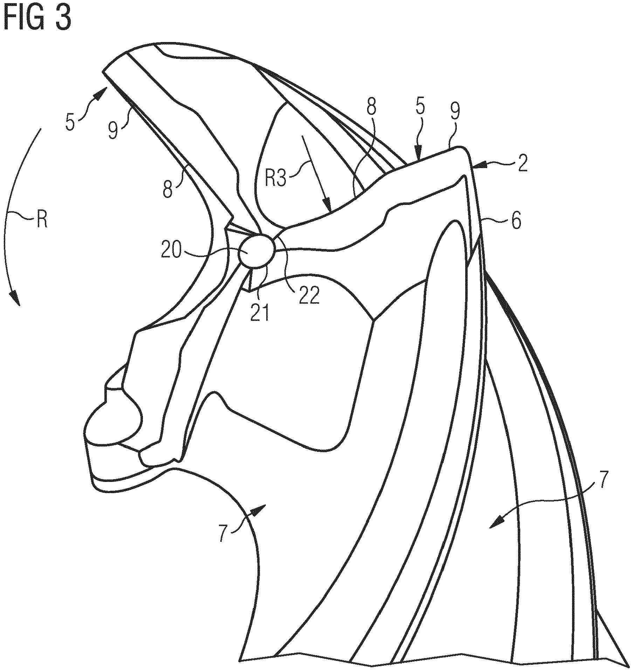

An seiner in der Zeichnungsebene liegenden Stirnseite 4 besitzt das Fräswerkzeug drei sternförmig und mit jeweils gleichem Abstand zu einander angeordnete Stirnschneiden 5, die von der Mündungsöffnung 21 aus radial und weitgehend geradlinig zum Umfang 2 hin verlaufen. Jede Stirnschneide 5 geht in eine umfangseitige Umfangsschneide 6 über (Figuren 2, 3) die sich in einem Schraubengang axial in die Richtung des nicht dargestellten Schaftabschnitts erstreckt. Jeder Stirnschneide 5 ist ein ebenfalls sich in Achsrichtung schraubenförmig verlaufender Spanabführkanal 7 zugeordnet, der radial in den Grundkörper 1 einschneidet.

Die drei Stirnschneiden 5 verfügen jeweils über einen der Drehachse näher liegenden inneren Schneidenabschnitt 8 und über einen der Drehachse ferner liegenden äußeren Schneidenabschnitt 9. Jeder äußere Schneidenabschnitt 9 reicht bis zum Umfang 2 hin, wo er mit einer Ausrundung R1 in die umfangsseitige Umfangsschneide 6 übergeht (Figur 2). Sein Verlauf ist in der vorliegenden Ausführungsform sowohl in der Seitenansicht der Figur 2 als auch in der Draufsicht der Figur 1 weitgehend geradlinig dargestellt, kann aber auch geschwungen bzw. gekrümmt verlaufen.

Jeder äußere Schneidenabschnitt 9 der drei Stirnschneiden 5 geht mit einer Ausrundung R2 in den inneren Schneidenabschnitt 8 über. Er erstreckt sich in einer Draufsicht zunächst weitgehend geradlinig und radial verlaufend auf die Mündungsöffnung 21 zu. Auch der innere Schneidenabschnitt 8 kann in einer anderen Ausführungsform zumindest abschnittsweise konvex oder konkav gekrümmt verlaufen. Kurz vor Erreichen der Mündungsöffnung 21 knickt der innere Schneidenabschnitt 8 in einem kurzen Spanleitabschnitt 22 ab. Der in der Draufsicht weitgehend geradlinige Spanleitabschnitt 22 schließt somit mit dem Radius des Fräsabschnitts 3 einen Spanleitwinkel ϕ ein, der in einem Bereich von etwa 10° bis 30° liegen kann und beispielsweise etwa 20° beträgt. Die Größe des Spanleitwinkels ϕ kann vom Durchmesser des Fräswerkzeugs, aber auch vom Durchmesser der Mündungsöffnung 21 abhängig sein.

Demzufolge kann die Länge des Spanleitschnitts 22 bei unterschiedlichen Werkzeugdurchmessern und unterschiedlichen Spanleitwinkeln ϕ noch stärker variieren. So hat sich zum Beispiel für einen Werkzeugdurchmesser von 6 mm bei einem Spanleitwinkel ϕ von 20° eine Länge des Spanleitabschnitts 22 von 0,5 mm als günstig erwiesen. Für einen Werkzeugdurchmesser von 12 mm zeigte sich bei gleichem Spanleitwinkel ϕ eine Länge des Spanleitabschnitts 22 von 0,7 mm als geeignet und bei einem Werkzeugdurchmesser von 20 mm eine Länge von 0,9 mm bei identischem Spanleitwinkel ϕ.

Die Seitenansicht der Figur 2 verdeutlicht außerdem, dass der Spanleitabschnitt 22 als drehachsennächster Abschnitt des inneren Schneidenabschnitts 8 unter Ausbilden einer Spanleitstufe 23 an der Mündungsöffnung 21 endet. Der Spanleitabschnitt 22 geht also nicht kontinuierlich, zum Beispiel in einer konvexen Ausrundung oder auf eine Höhe von Null abnehmend in die Mündungsöffnung 21 über, sondern bildet im Bereich des Umfangs der Mündungsöffnung 21 eine radial nach innen weisende Bruchkante aus. Außerdem schafft sie im Einsatz des Fräswerkzeugs einen Verdrängungsraum 24 zwischen der Werkstückoberfläche und der Mündungsöffnung 21, sodass ein Austritt von Kühl- und/oder Schmiermittel sichergestellt und Platz für Materialspäne bleibt. Lediglich an ihrem Bodenabschnitt ist die Spanleitstufe 22 mit einer Ausrundung R5 gegenüber der Mündungsöffnung 21 versehen, um dort Belastungsspitzen zu vermeiden.

Das Fräswerkzeug lässt sich insbesondere als Tauchfräser zum Herstellen von Ausnehmungen vielerlei Art einsetzen. Dazu wird bekannter Maßen das rotierende Fräswerkzeug zunächst axial auf eine Werkstückoberfläche in das zu bearbeitende Material hinein eingetaucht. Nach einer kurzen axialen Distanz wird das Fräswerkzeug üblicherweise nun zumindest zusätzlich auch seitlich verfahren, um keinen Spänestau in den Spanabfuhrkanälen, aber insbesondere auch an der Mündungsöffnung des Kanals für das Kühl- und/oder Schmiermittel zu erzeugen. Das erfindungsgemäße Fräswerkzeug jedoch lässt eine fortgesetzte oder ausschließlich axiale Werkzeugfahrt in das Material hinein zu, ohne dass es zu einem Spänestau oder einem Stehenbleiben von Restmaterial im schneidenfreien Bereich der Mündungsöffnung 21 käme. Denn die Stirnschneiden 5 sorgen in ihrem umfangsnahen und ihrem mittleren Bereich für einen guten Abtransport der abgescherten Späne in die Spanabführkanäle 7.

Im drehachsennahen Bereich wirkt nun der Spanleitabschnitt 22, indem er zunächst in an sich bekannter Weise Späne vom Material abschert. Die Spanleitstufe 23 sorgt für ein zuverlässiges Abbrechen jedes Spans vom Restmaterial. Aufgrund seines gegenüber der übrigen Stirnschneide 5 in der Draufsicht abgewinkelten Verlaufs drängt der Spanleitabschnitt 22 jeden abgescherten Span aber zunächst in den Verdrängungsraum 24 in Richtung der Drehachse, und zwar in einen Richtungsbereich zwischen einer radialen und einer tangentialen Richtung. Er drängt den Span also in denjenigen Bereich, in dem das Fräswerkzeug keine Schneide besitzt. Zusammen mit den Spanleitabschnitten 22 der weiteren Stirnschneiden 5 entsteht so eine scherende und zusätzlich tordierende Kraft auf das Restmaterial, so dass es mit- und abgerissen wird. Zusammen mit den übrigen Spänen wird es unter der Wirkung der Fliehkraft und des Drucks des Kühl- und/oder Schmiermittels radial nach außen Richtung Umfang 2 und damit in die Spanabführkanäle 7 transportiert.

Durch das erfolgreiche Abscheren von Material, das sich im schneidenfreien Bereich 21 des Fräsabschnitts 3 befindet, lässt sich erfindungsgemäße Fräswerkzeug quasi wie ein Bohrer zum ausschließlich senkrechten Fräsen von kreisrunden Sacklöchern oder Durchbrüchen verwenden. Da keine schrauben- oder helixförmige Führung des erfindungsgemäßen Fräswerkzeugs beim Fräsen zum Beispiel eines Sacklochs mehr erforderlich ist, kann für die Herstellung eines bestimmten Durchmessers des Sacklochs zudem ein erfindungsgemäßes Fräswerkzeug desselben Durchmessers verwendet werden. Der Entfall einer schraubenförmigen Führung des Werkzeugs und die Entsprechung von Werkzeugdurchmesser und Durchmesser des Sacklochs erleichtert sich die Bearbeitung von Werkstücken erheblich.

Die vorliegende beispielhaft dargestellte Ausführungsform des erfindungsgemäßen Fräswerkzeugs verfügt außerdem über eine Zentriereinrichtung. Sie besteht insbesondere in der besonderen Geometrie der Stirnschneiden:
Die drei Stirnschneiden 5 verfügen jeweils über einen der Drehachse näher liegenden inneren Schneidenabschnitt 8 und über einen der Drehachse ferner liegenden äußeren Schneidenabschnitt 9. Jeder äußere Schneidenabschnitt 9 reicht bis zum Umfang 2 hin, wo er mit einer Ausrundung R1 in die umfangsseitige Frässchneide 6 übergeht (Figur 2). Sein Verlauf ist in der vorliegenden Ausführungsform sowohl in der Seitenansicht der Figur 2 als auch in der Draufsicht der Figur 1 weitgehend geradlinig, kann aber auch geschwungen bzw. gekrümmt verlaufen. Mit einer stirnseitigen Ebene, auf der die Drehachse des Fräswerkzeugs senkrecht steht, schließen die äußeren Schneidenabschnitte 9 einen Winkel von etwa 7° ein (Figur 2), sodass sie in Richtung auf die Drehachse hin nach innen geneigt sind. Sie gehen mit einer Ausrundung R2 in die inneren Schneidenabschnitte 8 über. Damit ergibt sich ein kontinuierlicher und insbesondere kantenfreier Übergang jeder Stirnschneide 5 von ihrem äußeren Schneidenabschnitt 9 zu ihrem inneren Schneidenabschnitt 8, der einer hohen Lebensdauer des Fräswerkzeugs dient.

Jeder innere Schneidenabschnitt 8 erstreckt sich in einer Draufsicht weitgehend geradlinig auf die Drehachse zu (Figur 1). Auch der innere Schneidenabschnitt 8 kann in einer anderen Ausführungsform grundsätzlich auch gekrümmt verlaufen. Die Seitenansicht der Figur 2 lässt eine Ausrundung R3 des inneren Schneidenabschnitts 8 erkennen, die sich von der Stirnseite 4 weg und zum nicht dargestellten Schaftabschnitt hin wölbt, also konkav ist. Eine mittlere Neigung des inneren Schneidenabschnitts 8 lässt sich durch eine Sehne von einem Scheitelpunkt der Ausrundungen R2 zur Spanleitstufe 23 beschreiben. Die Sehne schließt demnach mit der obigen Ebene einen Winkel ein, der größer ist als der Winkel, der die Neigung des äußeren Schneidenabschnitts 9 beschreibt. Jedes drehachsenseitige Ende, nämlich bei der Ausrundung R2 für den äußeren Schneidenabschnitt 9 und bei der Spanleitstufe 23 für den inneren Schneidenabschnitt 8, liegt damit tiefer als das jeweils umfangseitige Ende, dieses bei der Ausrundung R1 für den äußeren Schneidenabschnitt 9 und bei der Ausrundung R2 für den inneren Schneidenabschnitt 8. Damit lässt sich eine rotationssymmetrische Kavität des Fräswerkzeugs wie eine flache Glocke erreichen.

Das Fräswerkzeug lässt sich insbesondere als Tauchfräser zum Herstellen von Ausnehmungen vielerlei Art einsetzen. Dazu wird das rotierende Fräswerkzeug zunächst axial auf eine Werkstückoberfläche hinein in das zu bearbeitende Material hinein eingetaucht. Nach einer kurzen axialen Distanz wird ein bekanntes Fräswerkzeug üblicherweise nun zumindest zusätzlich auch seitlich verfahren, um keinen Spänestau zwischen den Stirnschneiden, in den Spanabfuhrkanälen und vor allem an der Mündungsöffnung 21 zu verursachen. Das erfindungsgemäße Fräswerkzeug dagegen erlaubt ein axiales Eintauchen, wobei die oben beschriebene glockenförmige Geometrie der stirnseitigen Einbuchtung bzw. Kavität dem rotierenden Fräswerkzeug bei bestimmungsgemäßem Kontakt mit dem Werkstück eine hohe Stabilität und sehr gute Zentriereigenschaften verleiht. Damit ergibt sich ein Fräswerkzeug, das trotz Innenkühlung zum axialen Eintauchen wie beim Bohren geeignet ist.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So können die Verläufe des Spanleitabschnitts, der inneren und der äußeren Schneidenabschnitte in einer Seitenansicht und/oder in einer Draufsicht auch jeweils gekrümmt oder geradlinig verlaufen, andere Neigungswinkel vorliegen und/oder eine andere Schneidenanzahl gewählt werden. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Grundkörper
- 2: Umfang
- 3: Fräsabschnitt
- 4: Stirnseite
- 5: Stirnschneide
- 6: Umfangsschneide
- 7: Spanabführkanal
- 8: innerer Schneidenabschnitt
- 9: äußerer Schneidenabschnitt

- 20: Kühl- und/oder Schmiermittelkanal
- 21: Mündungsöffnung
- 22: Spanleitabschnitt
- 23: Spanleitstufe
- 24: Verdrängungsraum

- R: Drehrichtung
- R1 ... R5: Ausrundung

- ϕ: Spanleitwinkel

## Patentansprüche

1. Fräswerkzeug (1),
- mit einem im Wesentlichen zylindrischen Grundkörper (1) mit einer Drehachse,
- mit einem bis zu einem ersten Ende des Fräswerkzeugs reichenden Schaftabschnitt zum Einspannen des Fräswerkzeugs in einer Bearbeitungsmaschine,
- mit einem bis zu einem gegenüberliegenden zweiten Ende des Fräswerkzeugs reichenden Fräsabschnitt (3),
- mit einer Stirnseite (4) des Fräsabschnitts (3),
- die mindestens eine von der Drehachse im Wesentlichen radial zum Umfang verlaufende Stirnschneide (5) aufweist,
- mit einem in der Stirnseite (4) mündenden Kühl- und/oder Schmiermittelkanal (20), dessen Mündungsöffnung (21) in der Stirnseite (4) konzentrisch zur Drehachse liegt,
- wobei die Stirnschneide (5) bis an die Mündungsöffnung (21) heranreicht, und
- mit einem der Drehachse nahen Spanleitabschnitt (22) der Stirnschneide (5), der mit dem Radius einen sich zur Drehachse hin öffnenden Spanleitwinkel (ϕ) einschließt.

2. Fräswerkzeug nach Anspruch 1, mit einer in einer Draufsicht betrachtet in Drehrichtung gekrümmten Stirnschneide.

3. Fräswerkzeug nach einem der obigen Ansprüche, wobei der Spanleitabschnitt (22) von der Stirnfläche (4) weg mit einer Spanleitstufe (23) in die Mündungsöffnung (21) übergeht.

4. Fräswerkzeug nach einem der obigen Ansprüche, wobei der Spanleitabschnitt (22) in einem Spanleitwinkel (ϕ) zwischen 15° bis 25° verläuft.

5. Fräswerkzeug nach einem der obigen Ansprüche, wobei der Spanleitabschnitt (22) einen Bereich von 3% bis 10% des Durchmessers des Fräsabschnitts (3) einnimmt.

6. Fräswerkzeug nach einem der Ansprüche 3 bis 5, wobei die Höhe der Spanleitstufe (23) in einem Bereich von 3% bis 10% des Durchmessers des Fräsabschnitts (3) beträgt.

7. Fräswerkzeug nach einem der obigen Ansprüche, mit einer Zentriereinrichtung gegen ein Verlaufen des Fräswerkzeugs in einer Richtung rechtwinklig zur Drehachse.

8. Fräswerkzeug nach dem obigen Anspruch, mit einem der Drehachse näher liegenden inneren Schneidenabschnitt (8) der Stirnschneide (5), und mit einem der Drehachse ferner liegenden äußeren Schneidenabschnitt (9) der Stirnschneide (5) als Zentriereinrichtung, wobei der innere Schneidenabschnitt (8) zur Drehachse hin stärker abfällt als der äußere Schneidenabschnitt (9).

9. Fräswerkzeug nach dem obigen Anspruch, wobei zumindest der innere Schneidenabschnitt (8) zumindest abschnittsweise ausgerundet ist.
